# EUROPEAN PATENT APPLICATION

(11) **EP 1 922 912 A1**
(43) Date of publication of application: **21.05.2008**
(21) Application number: 07253522.2
(22) Date of filing: 06.09.2007
(51) Int. Cl.: A01D 34/68

(54) **Brake assembly**

(30) Priority: 15.11.2006 GB 0622819
(71) Applicant: Husqvarna UK Limited, County Durham, DL5 6UP (GB)
(72) Inventor: Smith, Ian Zetterstrom, Thirsk, Yorkshire YO7 2LJ (GB); Zwolinski, Paul, Northallerton, North Yorkshire DL7 8FE (GB)
(74) Representative: Pratt, David Martin

(57) **Abstract**

A centrifugally-released brake assembly for a power-operated rotary tool comprises a rotor (5), a carrier (10) fixed to the rotor, a stationary hub (9) concentric with the axis of rotation of the rotor, a brake member (12) associated with the carrier for movement into and out of engagement with the hub, and spring means (14) for biasing the brake member towards the hub. The hub (9) is provided with an external, circumferential brake surface, and the brake member is constituted by a brake shoe (12), which is pivotally mounted on the carrier (10) for movement towards and away from the hub, the brake shoe being biased towards the brake surface by the spring means (14).

## Description

This invention relates to a centrifugally-released brake assembly for a power-operated rotary tool such as a rotary vegetation cutter, and to a rotary vegetation cutter such as a rotary lawnmower, having such a brake assembly.

A rotary vegetation cutter having a centrifugally-released brake assembly is known. The known brake assembly includes a rotor, a stationary hub concentric with the axis of rotation of the rotor, a pair of brake pins carried by the motor and movable radially thereof, and springs carried by the rotor and acting radially inwardly with respect to the axis of rotation so as to bias the brake pins radially inwardly and towards engagement with the hub. The hub has a frusoconical surface, and the brake pins are reciprocally mounted within respective inclined supports. The brake pins are arranged in diametrically-opposed positions on opposite sides of the hub, and the springs are rated so that, when the rotor rotates at or above a given speed, the centrifugal force acting on the brake pins is sufficient to overcome the force of the springs, and move the brake pins out of frictional engagement with the hub. When the rotor rotates below the given speed, the springs force the brake pins against the hub to apply a frictional braking force to the rotor.

This known brake assembly is complicated in construction, requiring inclined supports for the brake pins.

An aim of the invention is to provide a rotary vegetation cutter having a simpler form of brake assembly.

The present invention provides a centrifugally-released brake assembly for a power-operated rotary tool, the assembly comprising a rotor, a carrier fixed to the rotor, a stationary hub concentric with the axis of rotation of the rotor, a brake member associated with the carrier for movement into and out of engagement with the hub, and spring means for biasing the brake member towards the hub, wherein the hub is provided with an external, circumferential brake surface, and the brake member is constituted by a brake shoe, which is pivotally mounted on the carrier for movement towards and away from the hub, the brake shoe being biased towards the brake surface by the spring means.

Preferably, one end of the brake shoe is pivotally mounted to the carrier by a pivot pin, the other end of the brake shoe being biased towards the brake surface by the spring means. The brake shoe may be an arcuate brake shoe, and the brake surface may be a cylindrical brake surface.

In a preferred embodiment, the brake member further comprises a second brake shoe, one end of which is pivotally mounted to the carrier by a pivot pin, the other end of that brake shoe being biased towards the brake surface by the spring means.

Preferably, the two brake shoes are positioned on opposite sides of the hub.

Advantageously, the spring means is constituted by a respective tension spring associated with each of the brake shoes, each spring acting between said other end of its brake shoe and the pivot pin at said one end of the other brake shoe. In this way, the brake assembly constituted by the two brake shoes and two springs is held in place using only the pivot pins which pivotally mount the brake shoes on the carrier. No other fastening devices are required.

Conveniently, the or each brake shoe has an arcuate braking surface which is engageable with the brake surface of the hub.

Preferably, the hub is integrally formed with a support, and the hub and the support are moulded in one piece from a plastics material such as glass-filled nylon. Alternatively, the hub is made of an organic friction material, and is fixed to a support.

The carrier may be made of a plastics material such as polyamide, and the or each brake shoe may be made by blanking from sheet metallic material such as steel.

In another preferred embodiment, the second brake shoe is positioned in a plane parallel to, and offset in the direction of the axis of rotation of the rotor, with respect to the first-mentioned brake shoe.

The invention also provides a lawnmower comprising a deck defining a cutting chamber which is open to ground datum, a rotary cutting blade rotatably mounted within the cutting chamber and a centrifugally-released brake assembly as hereinbefore defined, wherein the carrier is fixed to the cutting blade for rotation therewith, the rotary cutting blade constituting the powered rotary tool, and the hub is fixed to the deck.

The invention will now be described in greater detail, by way of example, with reference to the drawings, in which:-
Figure 1 is a side elevation of a lawnmower having a brake assembly constructed in accordance with the invention;
Figure 2 is a perspective view, taken from below, of the lawnmower of Figure 1;
Figure 3 is a perspective view showing part of the deck moulding of the lawnmower of Figures 1 and 2; and
Figure 4 is a perspective view of the rotary blade and associated brake components of the lawnmower of Figures 1 and 2.

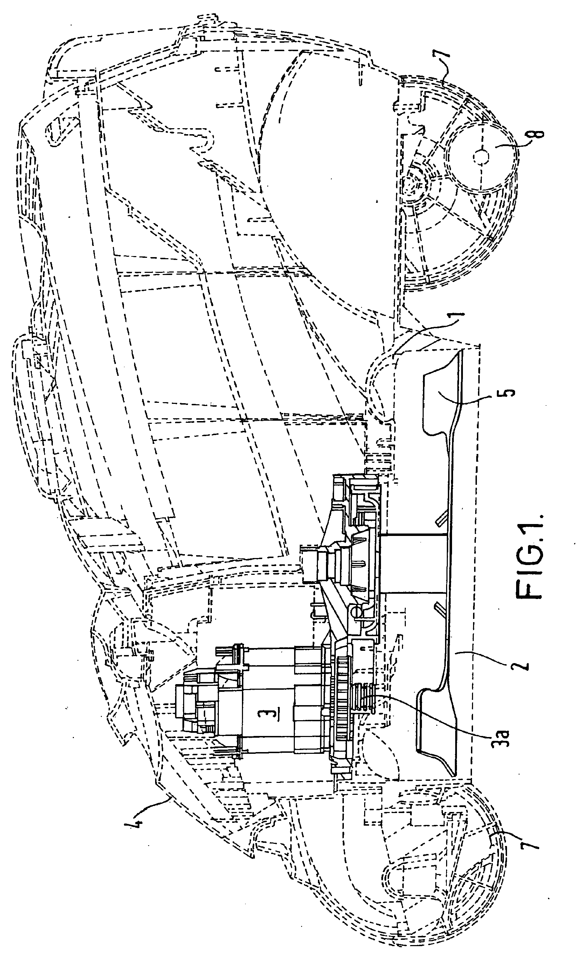

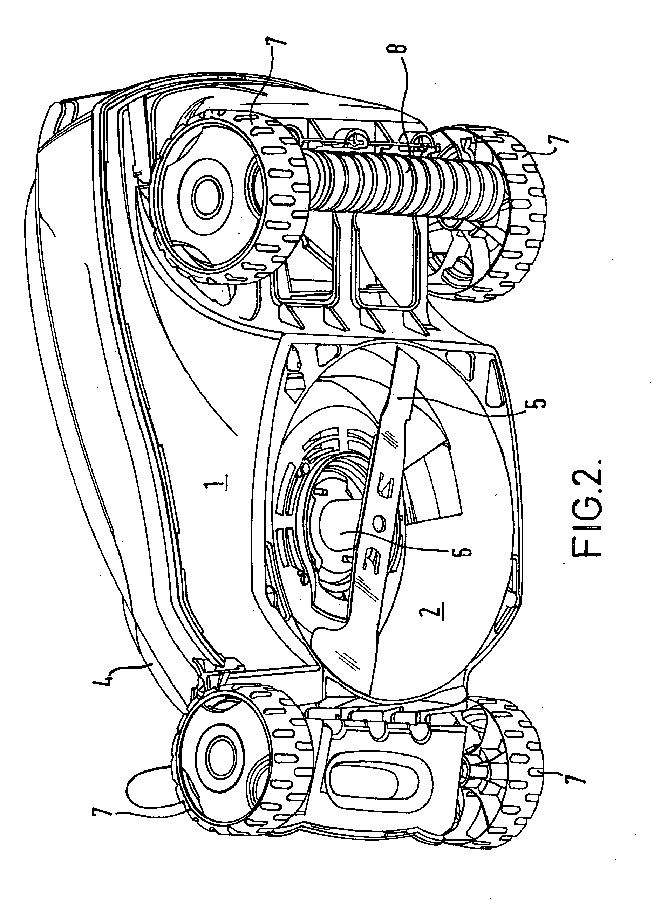

Referring to the drawings, Figures 1 and 2 show a lawnmower having a motor mounting plate 1 made of moulded plastics material, such as glass-filled nylon. The motor mounting plate is associated with a deck D of the lawnmower, the deck defining a cutting chamber 2 which is open to ground datum. A motor 3 is positioned within a housing 4 mounted above the plate 1. A cutter blade 5 is rotatably mounted within the cutting chamber 2 for rotation about a shaft 6 which is in drivable engagement with an output shaft 3a of the motor 3 via a drive belt (not shown). The deck D is supported by wheels 7 at the front and rear thereof, and a rear roller 8 is provided for generating a "stripe" appearance on a cut lawn.

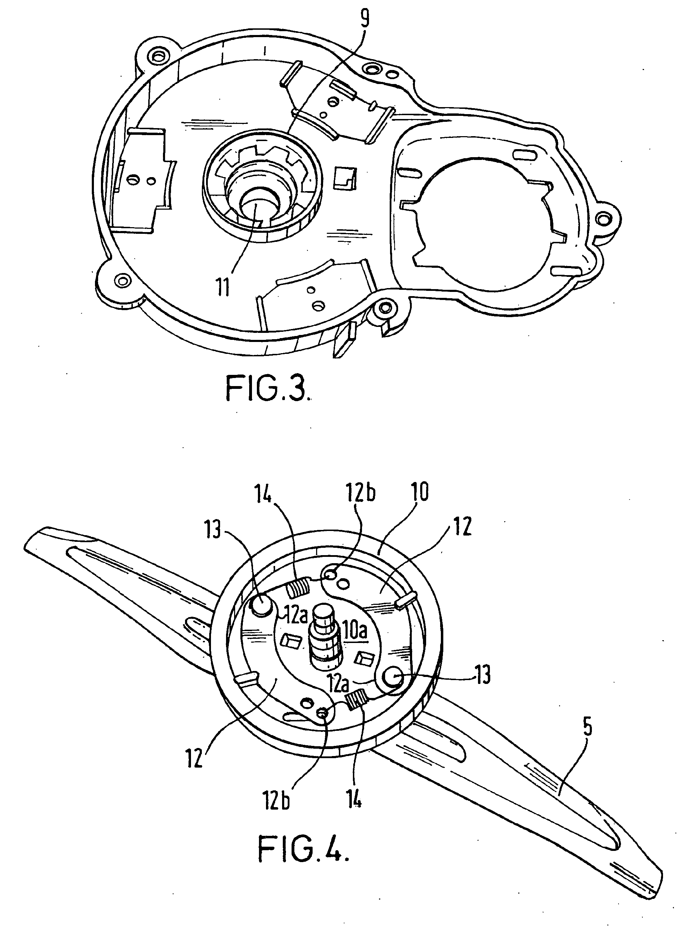

As shown in Figure 3, the plate 1 is provided with an annular, cylindrical hub 9 made of polyamide or an organic friction material. The hub 9 is fixed to the underneath side of the plate 1 so as to be concentric with the axis of rotation of the blade 5. Alternatively, the hub 9 is made of glass-filled nylon, and is moulded integrally with the plate 1. The outer cylindrical surface of the hub 9 constitutes a static frictional surface.

As shown in Figure 4, a carrier 10 is fixed to the blade 5. The carrier 10 is made of a plastics material such as polyamide, and has a circular base 10a and an annular, circumferential flange 10b. The carrier 10 is sized so that, when the shaft 6 is positioned within an aperture 11 provided in the plate 1 centrally with respect to the hub 9, the annular flange 10b surrounds, and is spaced from, the outer surface of the hub.

The base 10a of the carrier 10 is provided with a pair of diametrically-opposed, arcuate brake shoes 12. Each of the brake shoes 12 is pivotally fixed, by a respective pivot pin 13, at a first end 12a thereof to the base 10a of the carrier 10. The other end of each of the brake shoes 12 is provided with an aperture 12b. One end of a respective coil spring 14 is fixed to the aperture 12b of each of the brake shoes 12, the other end of that spring being fixed to the pivot pin 13 about which the other brake shoe is pivotable. The brake shoes 12 are made of sheet steel material, either by die casting or, preferably, by blanking from the sheet steel material.

The springs 14 bias the brake shoes 12 towards the static frictional surface defined by the hub 9 so that, when the rotary blade 5 is stationary, the brake shoes frictionally engage the static frictional surface, thereby resisting rotational movement of the carrier 10 (and hence the rotary blade 5) relative to the hub 9 (and hence to the plate 1).

When the motor 3 is energised, and the shaft 6, the carrier 9 and the rotary blade 5 rotate, the centrifugal force acting on the brake shoes 12 causes them to move radially outwardly by pivoting about their pivot pins 13, against the force of the springs 14. At a predetermined rotational speed, the centrifugal force acting on the brake shoes 12 will become greater than the biasing force provided by the springs 14, so that brake shoes move out of engagement with the static frictional surface, thereby permitting the rotary blade 5 to rotate freely without any braking action.

As long as the motor 3 is energised, and operates at or near its normal operational speed, the brake shoes 12 remain out of engagement with the static frictional surface of the hub 9. When the motor 3 is de-energised, however, the rotational speed of the shaft 6, the carrier 10 and the rotary blade 5 begins to drop; and, at the predetermined rotational speed, the centrifugal force exerted by the brake shoes 12 becomes less than the biasing force applied by the springs 14, so that the springs move the brake shoes back into engagement with the static frictional surface of the hub 9. This forcible contact has the affect of providing a retarding torque to the carrier 10, and the blade 5, thereby further decelerating the blade. The further reduction in the rotational speed further reduces the centrifugal force acting on the brake shoes 12, so that the biasing force of the springs 14 becomes more effective. In this way, the rotational speed of the shaft/carrier/rotary blade assembly is rapidly reduced. Accordingly, the brake shoes 12 are firmly biased into engagement with the static frictional surface of the hub 9, so that the rotary blade 5 comes to a rapid halt following de-energisation of the motor 3.

The centrifugally-released brake assembly described above is substantially simpler in construction than known such assemblies. Thus, the brake assembly described above has a simple cylindrical hub defining a static frictional surface engageable with a pair of spring-biased arcuate brake shoes 12. The brake shoes 12, which are preferably made by blanking from sheet steel material, are simple, cheap components that can be made with no machining steps. Moreover, the springs 14 are simple coil springs which require no tooling operations. Where the hub 9 is formed integrally with the motor mounting plate 1, a further simplification results owing to the reduction in the number of components needed to form the brake assembly. Moreover, the arrangement is such that each spring 14 acts between the pivot point of one brake shoe 12 and the opposite end of the other brake shoe. In this way, the brake shoes 12 are held in position without the use of additional fastening devices such as rivets or screws. In other words, the brake assembly of the present invention is cheap and simple to manufacture, using a reduced number of cheap components, whilst providing an effective centrifugal braking action.

It will be apparent that modifications could be made to the brake assembly described above. Thus, instead of the plate 1/hub 9 being made of a glass-filled nylon any suitable plastics material having a high melting point could be used.

In another modification, the two brake shoes could be axially offset slightly, so that each of the shoes engages the static frictional surface of the hub at a different position. This results in two wear grooves being formed in the static frictional surface of the hub, each of these wear grooves being about one half the depth of the wear groove that occurs when the brake shoes are co-planar. As the braking force is inversely proportional to the depth of a wear groove, this modified arrangement results in a better braking force as the brake assembly wears.

## Claims

1. A centrifugally-released brake assembly for a power-operated rotary tool, the assembly comprising a rotor, a carrier fixed to the rotor, a stationary hub concentric with the axis of rotation of the rotor, a brake member associated with the carrier for movement into and out of engagement with the hub, and spring means for biasing the brake member towards the hub, wherein the hub is provided with an external, circumferential brake surface, and the brake member is constituted by a brake shoe, which is pivotally mounted on the carrier for movement towards and away from the hub, the brake shoe being biased towards the brake surface by the spring means.

2. An assembly as claimed in claim 1, wherein one end of the brake shoe is pivotally mounted to the carrier by a pivot pin, the other end of the brake shoe being biased towards the brake surface by the spring means.

3. An assembly as claimed in claim 2, wherein the brake shoe is an arcuate brake shoe.

4. An assembly as claimed in any one of claims 1 to 3, wherein the brake surface is a cylindrical brake surface.

5. An assembly as claimed in any one of claims 1 to 4, wherein the brake member further comprises a second brake shoe, one end of which is pivotally mounted to the carrier by a pivot pin, the other end of that brake shoe being biased towards the brake surface by the spring means.

6. An assembly as claimed in claim 5, wherein the two brake shoes are positioned on opposite sides of the hub.

7. An assembly as claimed in claim 5 or claim 6, the spring means is constituted by a respective tension spring associated with each of the brake shoes, each spring acting between said other end of its brake shoe and the pivot pin at said one end of the other brake shoe.

8. An assembly as claimed in any one of claims 1 to 7, wherein the or each brake shoe has an arcuate braking surface which is engageable with the brake surface of the hub.

9. An assembly as claimed in any one of claims 1 to 8, wherein the hub is integrally formed with a support.

10. An assembly as claimed in claim 9, wherein the hub and the support are moulded in one piece from a plastics material such as glass-filled nylon.

11. An assembly as claimed in any one of claims 1 to 8, wherein the hub is made of an organic friction material, and is fixed to a support.

12. An assembly as claimed in any one of claims 1 to 11, wherein the carrier is made of a plastics material such as polyamide.

13. An assembly as claimed in any one of claims 1 to 9, wherein the or each brake shoe is made by blanking from sheet metallic material such as steel.

14. An assembly as claimed in claim 5, or in any one of claims 6 to 13 when appendant to claim 5, wherein the second brake shoe is positioned in a plane parallel to, and offset in the direction of the axis of rotation of the rotor, with respect to the first-mentioned brake shoe.

15. A lawnmower comprising a deck defining a cutting chamber which is open to ground datum, a rotary cutting blade rotatably mounted within the cutting chamber and a centrifugally-released brake assembly as claimed in any one of claims 1 to 14, wherein the carrier is fixed to the cutting blade for rotation therewith, the rotary cutting blade constitutes the power-operated rotary tool, and the hub is fixed to the deck.

16. A centrifugally-released brake assembly substantially as hereinbefore described with reference to, and as illustrated by, the drawings.

17. A lawnmower substantially as hereinbefore described with reference to, and as illustrated by, the drawings.
